# DEMANDE DE BREVET EUROPEEN

(11) **EP 3 708 361 A1**
(43) Date de publication de la demande: **16.09.2020**
(21) Numéro de dépôt: 19163187.8
(22) Date de dépôt: 15.03.2019
(51) Int. Cl.: B32B 17/10, B32B 7/12, B32B 17/06, B32B 27/32

(54) **FILM**

(71) Demandeur: AGC Glass Europe, 1348 Louvain-La-Neuve (BE)
(72) Inventeur: LESCOT, Thomas, 6210 Reves (BE)
(74) Mandataire: Le Vaguerèse, Sylvain Jacques

(57) **Abrégé**

L'invention concerne un vitrage résistant au feu comprenant au moins une couche intumescente et, de part et d'autre de celle-ci, une feuille de verre caractérisé en ce qu'au moins une face de ce vitrage est revêtue d'un film plastique adhérent à cette face, cette adhérence étant suffisante pour que le film ne soit pas décollé dans les opérations éventuelles de découpe du vitrage, que celle-ci soit au moyen d'une scie avec refroidissement à l'eau, ou par jet d'eau sous haute pression.

## Description

L'invention concerne des vitrages résistant au feu comprenant au moins une couche de matériau intumescent entre deux feuilles de verre, et la manière de mettre ces vitrages aux dimensions souhaitées.

Les vitrages résistant au feu du type considéré, c'est-à-dire ceux comprenant au moins une couche de matériau intumescent à base de silicate alcalin hydraté sont bien connus voir par exemple WO2007/060203 ou WO2011/036154. Dans la pratique ils sont constitués d'une ou plusieurs couches de ce matériau le plus souvent de 1 à trois couches chacune séparée de ces voisines par une feuille de verre.

La production de ces vitrages suit principalement deux voies distinctes. La plus usuelle consiste à procéder au séchage d'une solution de silicate alcalin hydraté communément nommé « « water-glass », cette solution étant appliquée sur une feuille de verre maintenue horizontalement. Le séchage jusqu'à durcissement est effectué en atmosphère ventilée chauffée et à hygrométrie contrôlée. Après l'opération de séchage les vitrages sont constitués par application d'une feuille de verre recouvrant la couche de silicate séchée.

Dans l'opération décrite ci-dessus, le vitrage ne comprend qu'une couche intumescente. La formation de vitrages comprenant plusieurs couches intumescentes s'effectue par superposition de plusieurs feuilles de verre revêtues de la couche séchée et pour compléter par l'application de la feuille de verre comme précédemment sur la couche de la dernière feuille comportant une couche intumescente.

Un deuxième mode de production des vitrages comportant des silicates alcalins consiste préparer une composition de telle sorte que le silicate forme spontanément un gel solide dans un temps relativement bref après que la composition ait été constituée à partir de ces constituants initialement liquides. C'est sous cette forme liquide que la composition est conduite dans un espace formé par deux feuilles de verre et un cordon d'étanchéité à la périphérie de ces feuilles. Le remplissage de cet espace est suivi de la solidification de la composition.

Les deux modes de préparation présentés ci-dessus sont ordinairement réalisés dans des dimensions « standard ». Les plus grands volumes préparés sont par exemple de 3x3 mètres. Pour adapter les vitrages aux utilisations finales il est nécessaire de procéder à la mise aux dimensions requises par l'utilisateur. Cette mise à dimension par découpe des vitrages constitués n'est réalisable de façon commode que sur des feuilles de verre qui n'ont pas subi de trempe préalable, ou éventuellement une trempe chimique. Le choix de feuilles non trempées est celui qui prévaut pour les vitrages dont la ou les couches intumescentes sont obtenues par séchage. A l'inverse pour les produits dont la formation passe par le gel spontané d'une composition liquide, les feuilles de verre sont le plus habituellement, mais pas exclusivement, l'objet d'une trempe préalable pour leur conférer un comportement plus résistant dans l'épreuve au feu.

Dans la pratique, et notamment pour des raisons d'économie de ces vitrages, il est préférable de les préparer dans des dimensions suffisamment grandes pour se prêter à la mise ultérieure aux dimensions requises par l'utilisateur final. A cet effet les produits les plus usuels présentent des dimensions initiales qui peuvent être de plusieurs mètres de côté. Ces produits sont le plus souvent l'objet d'une distribution par des détaillants situés à proximité des utilisateurs. Les produits en question sont soumis aux conditions qui suivent leur production, stockage, transport en lots plus ou moins importants, de nouveau stockage et finalement mise en oeuvre aux dimensions adéquates.

Les opérations situées entre la production initiale et la mise en forme finale sont autant d'occasions d'altération, de formation de défauts telles que rayures, taches diverses et autres, qu'il n'est pas possible d'éviter sans précautions particulières.

La mise à dimension des vitrages s'effectue par découpe des volumes initialement produits. Cette découpe peut être réalisée par différents moyens. Le plus souvent la découpe est de type mécanique au moyen de scies avec liquide de refroidissement, ou par jets sous forte pression de liquide, principalement d'eau, éventuellement chargée de particules abrasives.

L'utilisation de ces outils de découpe s'accompagne de projections inévitables de particules détachées sur les faces des produits découpés. Ces projections, poussières de verre ou de silicates, et notamment des gouttelettes de liquide entrainant du silicate en solution, rendent nécessaires des opérations ultérieures de nettoyage source de coûts supplémentaires. En particulier, si les gouttes de silicates projetées viennent à sécher les traces sont alors quasi ineffaçables. Le nettoyage est aussi d'autant plus nécessaire lorsque les vitrages en questions sont incorporés dans des vitrages multiples. Les faces non exposées à l'extérieur de ces vitrages ne sont plus accessibles.

Pour répondre à ces questions l'invention propose de revêtir les vitrages le plus tôt possible après leur production de films protecteurs. Ces films sont avantageusement appliqués sur l'ensemble de leurs surfaces exposées aux aléas externes. Les films en question sont de préférence appliqués sur les deux faces des vitrages.

La présence de ces films évite les salissures, poussières, et autres traces qui nécessiteraient un nettoyage. Le retrait des films après découpe élimine aussi toutes les projections liées à cette découpe. Leur présence permet aussi de prévenir les rayures ou altérations mécaniques légères analogues.

Les films utilisés sont appliqués sur les faces dans des conditions qui garantissent leur adhérence à celles-ci, adhérence maintenue avantageusement depuis leur application sur les vitrages le plus tôt possible après la constitution de ceux-ci, au moins jusqu'après la découpe, et le cas échéant jusqu'au retrait final du produit installé en position définitive.

Les vitrages revêtus des films selon l'invention ne doivent pas compliquer les opérations traditionnelles de manutention stockage et mise en oeuvre. Ils sont par ailleurs suffisamment adhérant pour résister à ces opérations.

Les films de protection utilisés sont avantageusement suffisamment adhérant pour permettre la saisie des vitrages par les outils mécaniques traditionnels. En particulier la saisie au moyen de ventouses de préhension ne doit pas conduire au décollage du film. Avantageusement cette aptitude est mesurée en soumettant le vitrage et le film qui le revêt à une épreuve de vide partiel pendant une durée déterminée. La mesure de la variation du vide appliqué doit rester inférieure à un seuil garantissant, quelle que soit l'opération effectuée, le maintien efficace de la saisie du vitrage.

Dans les opérations usuelles les vitrages revêtus de films protecteurs selon l'invention soumis par exemple à un vide partiel d'au moins 0,5 bar, doivent maintenir ce vide avec une variation qui ne dépasse pas 5% de celui-ci pendant la durée la plus longue concernée par la préhension mise en oeuvre. En pratique une telle durée n'est pas supérieure à 10 minutes et le plus souvent ne dépasse pas une minute ou moins.

Le film doit aussi présenter une bonne résistance. Il ne doit pas se rompre lorsque le film est soumis au vide des ventouses, et aussi résister aux efforts mécaniques liés notamment aux différentes opérations sans se déchirer. Par ailleurs il est avantageux que le film puisse être retiré de manière relativement simple, de préférence également sans se déchirer. Cette dernière condition impose que l'adhérence tout en étant suffisante ne doit pas dépasser un certain seuil lequel dépend de plusieurs facteurs, certains liés au film lui-même comme sa nature, son épaisseur, mais aussi à l'adhésif qui le complète comme indiqué plus loin.

Les films utilisés pour la mise en oeuvre de l'invention résistent aussi de préférence aux aléas de l'exposition aux conditions de stockage, lesquelles peuvent se situer à l'extérieur de bâtiments. Le stockage selon les cas, éventuellement en conditions atmosphériques externes peut se prolonger plusieurs mois. Les films doivent supporter sans se décoller les variations de température, d'humidité et d'exposition notamment aux UV.

L'application de films de protection sur les vitrages selon l'invention doit encore ne pas entraîner un surcoût important ce qui conduit à l'utilisation de film à base de matériaux aussi usuels que possible.

Avantageusement les films de protection utilisés selon l'invention sont des films de polyéthylène ou de polypropylène. Ils présentent notamment l'avantage d'une production peu coûteuse et d'une certaine facilité de mise en oeuvre pour l'application considérée. D'autres films sont néanmoins possibles qui présentent de bonnes propriétés notamment de résistance, tels que les films de PVC.

Ces films sont par ailleurs produits en diverse épaisseurs qui permettent une bonne adaptation et de bonnes propriétés de résistance telles qu'indiquées précédemment.

Pour une bonne résistance mécanique et une application facile, les films utilisés présentent de préférence une épaisseur comprise entre 0,03 et mm et 0,1mm avantageusement de 0,05 à 0,1mm.

Les films utilisés sont avantageusement transparents ou au moins translucides pour ne pas masquer les éventuels défauts, notamment ceux éventuels de la couche intumescente comme les microbulles.

En eux-mêmes l'application des films notamment de polyéthylène ou polypropylène peut conduire à une certaine adhérence, principalement par effet électrostatique. Cette adhérence est normalement insuffisante pour répondre aux exigences indiquées ci-dessus. Pour conférer l'adhérence requise les films sont appliqués avec interposition d'une fine pellicule d'adhésif.

Le type d'adhésif mis en oeuvre doit répondre à différentes exigences. Il doit d'abord être parfaitement compatible avec le matériau du film lui-même et maintenir ses qualités dans toutes les conditions de mise en oeuvre considérées. Notamment les propriétés adhésives, tant vis-à-vis du film que de la surface du verre doivent demeurer aussi longtemps que le film est en position sur le verre.

L'adhésif doit être suffisamment puissant, mais dans une limite qui permet le détachement du film sans conduire à la rupture de celui-ci lorsqu'une traction adéquate est exercée pour détacher le film du vitrage.

Avantageusement le film adhérant au vitrage présente une résistance au décollement dans les conditions de la norme européenne AFERA comprise entre 20 et 400cN/cm et de préférence entre 45 et 250cN/cm.

La quantité d'adhésif est aussi faible que possible pour assurer l'adhérence requise en minimisant les traces qui peuvent rester sur le verre une fois le film retiré. L'épaisseur de cet adhésif est ordinairement dans le domaine de 5□m à 50□m et le plus souvent de 10 à 30□m.

Même si la quantité d'adhésif est très faible, elle ne doit pas conduire à la présence de marques sur le vitrage après le retrait du film. L'affinité physico-chimique de l'adhésif pour le matériau du film est normalement plus importante que celle vis-à-vis du verre. Ceci fait que la quasi-totalité de l'adhésif est éliminée avec le film au retrait de celui-ci, de sorte que pratiquement aucune trace d'adhésif ne demeure sur le verre. Au plus les traces infimes d'adhésif restant après le retrait du film ne sont pas décelables visuellement et ne nécessitent pas de nettoyage spécifique du produit final.

Des adhésifs répondant aux exigences énoncées ci-dessus sont notamment constitués de colles acryliques, de polyuréthanes de caoutchouc et résines ou analogues.

L'invention est décrite en détail par l'exemple de mise en oeuvre suivant dans lequel le vitrage est constitué de deux feuilles de verre « float », l'une monolithique de 3mm d'épaisseur, l'autre feuilletée composée de deux feuilles de 3mm chacune réunies au moyen d'une feuille de PVB de 0,76mm d'épaisseur. Une couche de 8mm d'épaisseur de matériau intumescent constitué de silicate alcalin hydraté est située entre ces deux feuilles de verre.

L'exemple choisi à titre indicatif représente une structure ne comprenant qu'une couche intumescente). Néanmoins l'invention s'applique à toutes les structures des vitrages résistant au feu notamment ceux qui comportent une pluralité de couches intumescentes entre une pluralité également de feuilles de verre. Pour ces dernières les feuilles sont le plus souvent monolithiques, mais elles peuvent aussi être feuilletées, comprenant des intercalaires de PVB ou d'EVA, pour l'amélioration notamment des qualités mécaniques.

Les feuilles de verre ne sont pas trempées.

Le matériau intumescent qui présente une épaisseur de 1,5mm est constitué de silicate de potassium. Le rapport molaire SiO₂/Na₂O est de 3,4. La teneur pondérale en eau est de 28%. Le matériau comporte en outre de la glycérine à raison de 13%, et de 1% TMAH.

La couche est formée par séchage de la composition appliquée sur l'une des feuilles de verre. Après constitution de la couche la seconde feuille de verre est superposée et l'ensemble associé par un calandrage sous pression à température ambiante.

Le vitrage produit, de 2x3,21m, est immédiatement revêtu sur ses deux faces d'un film de polyéthylène de 0,8mm d'épaisseur revêtu d'une colle de type caoutchouc à raison de 20µm.

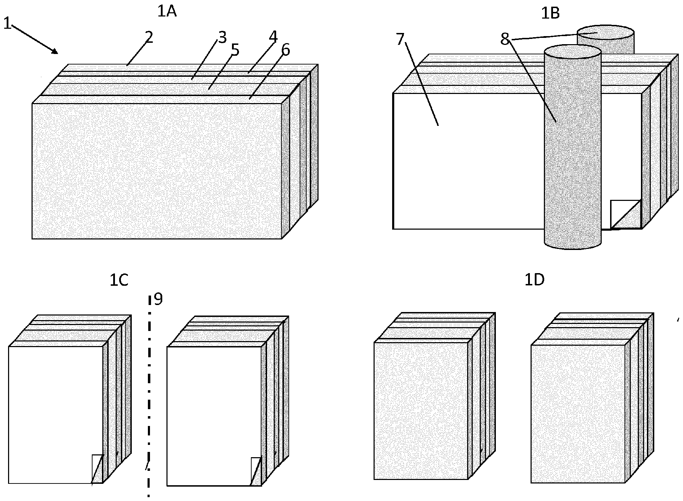

L'adhérence du film sur les feuilles de verre est de 65cN/cm
Le schéma de la figure illustre le revêtement du vitrage 1 constitué de la feuille de verre monolithique 6, et d'un ensemble feuilleté composé de deux feuilles 2 et 3 assemblée avec une feuille intercalaire 4 thermoplastique de PVB. Chacune des feuilles de verre Une couche intumescente 5 est disposée entre les feuilles 3 et 6. Un film protecteur 7 est appliqué par calandrage schématisé par les deux rouleaux 8, sur chacune des deux faces externes du vitrage. Le vitrage ainsi protégé peut alors être stocké et mis à dimensions par sciage schématisé en 9. Les films évitent les dépôts de particules et gouttelettes sur les faces des feuilles de verre. L'élimination des films est effectuée après la découpe au moment de la mise en oeuvre finale.

Le vitrage revêtu des films est soumis aux épreuves de résistance suivantes :
- Essai de manutention à l'aide d'un palonnier à ventouses. Aucun décollement du film n'est observé et le vide se maintient pendant 10 minutes à une valeur inférieure à -0,6 bar bien que la pompe à vide soit mise à l'arrêt.
- Essai de découpe à la scie à lame diamantée. On observe pas de délamination du film sur les deux faces quel que soit le sens de rotation par rapport au film. La découpe est conduite dans les mêmes conditions qu'en l'absence de film.
- Elimination des films après découpe sans trace de de silicate séché ou de colle des films.
- L'élimination des films opérés après 10 mois de stockage en intérieur des vitrages revêtus conduit aux mêmes résultats. Le stockage pendant un an des produits préalablement découpés montre également les mêmes résultats.

## Revendications

1. Vitrage résistant au feu comprenant au moins une couche intumescente et de part et d'autre de celle-ci une feuille de verre **caractérisé en ce qu'**au moins une face de ce vitrage est revêtue d'un film plastique adhérent à cette face, cette adhérence étant suffisante pour que le film ne soit pas décollé dans les opérations éventuelles de découpe du vitrage que celle-ci soit au moyen d'une scie avec refroidissement à l'eau, ou par jet d'eau sous haute pression.

2. Vitrage selon la revendication 1 dans lequel le film ne laisse aucune trace visible d'adhésion après son retrait.

3. Vitrage selon l'une des revendications précédentes dont le film est suffisamment adhérent pour permettre la manipulation par les ventouses de préhension sans risque de décollage.

4. Vitrage selon l'une des revendications précédentes dont le film supporte sans modification sensible de ses propriétés pendant un stockage prolongé même en conditions atmosphériques externes.

5. Vitrage selon l'une des revendications précédentes dont les deux faces sont revêtues d'un film plastique adhérent.

6. Vitrage selon l'une des revendications précédentes dans lequel le film peut être pelé sans se déchirer.

7. Vitrage selon l'une des revendications précédentes lequel soumis à un vide partiel d'au moins 0,5 bar, tel que pratiqué par les outils de préhension à ventouse, ce vide après 10mn ne varie pas de plus de 5%.

8. Vitrage selon l'une des revendications précédentes dans lequel le film est de polyéthylène ou de polypropylène.

9. Vitrage selon la revendication 8 dans lequel le film présente une épaisseur comprise entre 0,03 et 0,2 mm et de préférence entre 0,05 et 0,1mm.

10. Vitrage selon la revendication 8 ou la revendication 9 dans lequel le film comporte une pellicule d'adhésif.

11. Vitrage selon la revendication 10 dans lequel la pellicule d'adhésif est de polymère acryliques de polyuréthanes ou de type caoutchouc.

12. Vitrage selon l'une des revendications précédents dans lequel le film est transparent ou au moins translucide.
